# EUROPÄISCHE PATENTSCHRIFT

(11) **EP 0 478 930 B1**
(45) Veröffentlichungstag und Bekanntmachung des Hinweises auf die Patenterteilung: **20.04.1994**
(21) Anmeldenummer: 91113461.7
(22) Anmeldetag: 10.08.1991
(51) Int. Cl.: A01K 9/00, F16K 11/085

(54) **Futtermittel-Zuführvorrichtung**
Feeder device for feedstuff
Dispositif d'alimentation pour des aliments pour des animaux

(30) Priorität: 05.10.1990 DE 9013887 U
(43) Veröffentlichungstag der Anmeldung: 08.04.1992
(73) Patentinhaber: Förster, Martin, Dipl.-Ing., D-78234 Engen (DE)
(72) Erfinder: Förster, Martin, Dipl.-Ing., D-78234 Engen (DE)
(74) Vertreter: Engelhardt, Guido, Dipl.-Ing.

(56) Entgegenhaltungen:
- EP-A- 0 059 384
- DD-A- 106 687
- DE-A- 3 416 335
- US-A- 2 854 027

## Beschreibung

Die Erfindung bezieht sich auf eine Vorrichtung zur gesteuerten Zuführung eines flüssigen in einem Tränkeautomaten aufbereiteten Futtermittels zu einer oder mehreren Saugstellen, mit einem dem Tränkeautomaten nachgeschalteten Wegeventil.

Bei den bekannten Vorrichtungen dieser Art, mittels denen jeweils zwei Saugstellen wechselweise mit Futtermittel versorgt werden können, ist als Wegeventil ein elektromagnetisch betätigbares Absperrventil vorgesehen, das zwei Schaltstellungen aufweist. Die einzelnen Saugstellen sind somit zwar gesteuert an den Tränkeautomaten anschließbar, die Reinigung der Anlage, insbesondere des Wegeventils, bereitet jedoch, da ein Durchspülen nur bedingt möglich ist, erhebliche Schwierigkeiten und ist sehr zeitaufwendig. Und da das Futtermittel an den verstellbaren Teilen des Wegeventils haftet, wird dadurch dessen Verstellbarkeit, sofern dieses nicht jeweils in kurzen Zeitabständen gesäubert wird, in einem erheblichen Maße beeinträchtigt. Betriebsstörungen sind vielfach die Folge.

Aufgabe der Erfindung ist es daher, ein Wegeventil für eine Futtermittelzuführvorrichtung der eingangs genannten Gattung zu schaffen, das nicht nur eine einfache konstruktive Ausgestaltung aufweist und somit in wirtschaftlicher Weise zu fertigen ist, sondern das vor allem einen störungsfreien Betrieb über einen längeren Zeitraum ermöglicht. Außerdem sollen das Wegeventil sowie die mit diesem ausgestattete Anlage leicht zu reinigen und es soll eine hohe Betriebssicherheit gegeben sein.

Gemäß der Erfindung wird dies dadurch erreicht, daß das Wegeventil als in einem stationären Gehäuse verstellbar rotierend gelagerter Drehschieber ausgebildet ist, der eine zentrale an eine Zuführungsleitung anschließbare Aufnahmekammer aufweist und in dessen Wandung eine oder mehrere Austrittsöffnungen eingearbeitet sind, über die die Aufnahmekammer wechselweise mit an dem Gehäuse angebrachte Anschlußleitungen verbindbar ist.

Zweckmäßig ist es hierbei, das den Drehschieber aufnehmende Gehäuse als Quader mit einer rechteckigen, vorzugsweise quadratischen Querschnittsfläche auszubilden, in dem in einer Bohrung der Drehschieber beispielsweise mittels eines angeformten Bundes drehbar abgestützt ist.

Um die Anschlußleitungen sicher an dem Gehäuse befestigen zu können, ist es ferner angebracht, den Drehschieber exzentrisch in dem Gehäuse vorzugsweise in Richtung einer der Diagonalen versetzt in diesem anzuordnen, so daß bei leichter Bauweise dennoch eine ausreichende Wandstärke für zwei Schraubverbindungen gegeben ist.

Vorteilhaft ist es ferner, die in den Drehschieber eingearbeiteten Austrittsöffnungen als Längsschlitze zu gestalten.

Zur wechselweisen Zuführung von Futtermittel zu zwei Saugstellen sollte der Drehschieber mit zwei rechtwinklig zueinander versetzt angeordneten Austrittsöffnungen versehen und in vier Schaltstellungen verstellbar sein.

Des weiteren kann der Drehschieber trieblich mit einem steuerbaren Antriebsmotor verbunden sein, wobei zwischen diesem und dem Drehschieber ein Steuerglied eingesetzt sein sollte, das den Schaltstellungen des Drehschiebers zugeordnete mit Endschaltern zusammenwirkende Schaltnocken aufweist. Der Drehschieber kann hierbei mittels einer Steckkupplung lösbar mit dem Steuerglied verbunden sein. Auf diese Weise ist eine zuverlässige Umsteuerung gewährleistet.

Angebracht ist es auch, die an das Wegeventil angeschlossenen zu den Saugstellen führenden Leitungen bei geschlossenem Wegeventil jeweils über eine mit einem Rückschlagventil versehene Zweigleitung an einen Wassertank oder dgl. anzuschließen.

Wird ein Wegeventil gemäß der Erfindung ausgebildet, so ist nicht nur eine stets störungsfreie Betriebsweise gewährleistet, da der Drehschieber mit Hilfe eines Antriebsmotors gesteuert verstellbar ist, sondern es ist auch leicht möglich, die Anlage und das Wegeventil in kurzer Zeit zu säubern. Das Wegeventil ist nämlich unempfindlich gegenüber dem Futtermittel und weist mehrere Schaltstellungen auf, so daß dieses und die angeschlossenen Leitungen ohne Schwierigkeiten gründllich durchgespült werden können. Außerdem sind das Gehäuse wie auch der Drehschieber wirtschaftlich herzustellen, bei hoher Betriebssicherheit wird somit durch das vorschlagsgemäß ausgebildete Wegeventil die Funktion einer mit diesem ausgestatteten Anlage in einem erheblichen Maße verbessert.

In der Zeichnung ist ein Ausführungsbeispiel des gemäß der Erfindung ausgebildeten Wegeventils dargestellt, das nachfolgend im einzelnen erläutert ist. Hierbei zeigt:
- Figur 1: eine mit zwei Saugstellen ausgestattete Fütterungsvorrichtung in schematischer Darstellung,

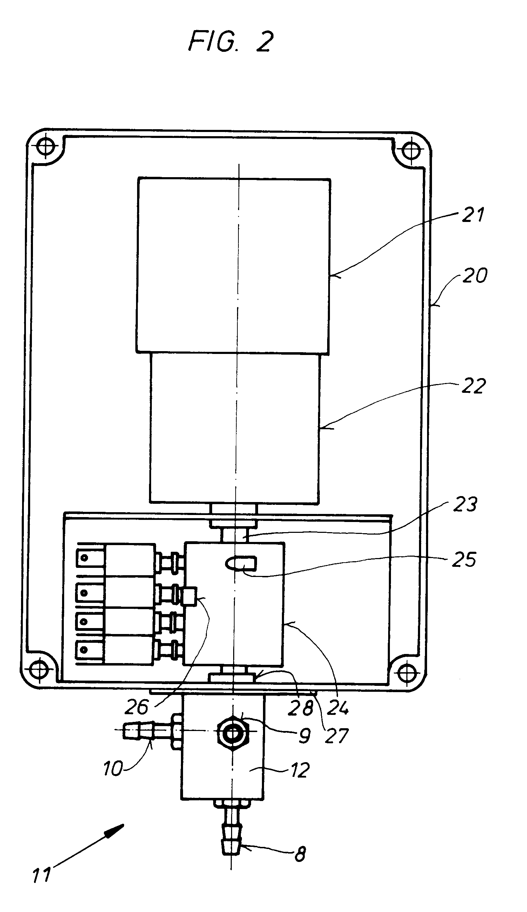

- Figur 2: das bei der Vorrichtung nach Figur 1 vorgesehene Wegeventil mit Antriebsmotor in einem vergrößerten Maßstab,
- Figur 3: das Wegeventil nach Figur 2 in einem achssenkrechten Schnitt
und
- Figur 4a bis 4d: jeweils einen Schnitt nach der Linie IV - IV der Figur 3 in unterschiedlichen Schaltstellungen des Drehschiebers.

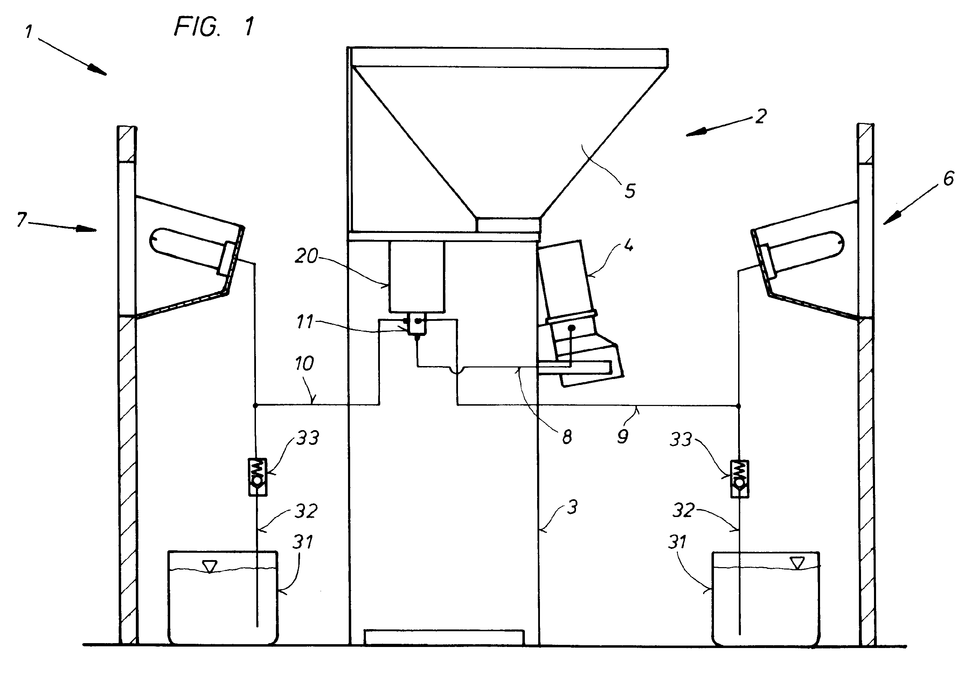

Die in Figur 1 dargestellte und mit 1 bezeichnete Vorrichtung dient zur gesteuerten wechselweisen Zuführung eines flüssigen Futtermittels zu zwei Saugstellen 6 und 7, das in einem Tränkeautomaten 2 mittels eines Mixers 4 aufbereitet wird. In dem an einem Gehäuse 3 befestigten Mixer 4 wird hierbei pulverförmiges einem Vorratsbehälter 5 entnommenes Futtermittel durch Zugabe von Wasser und/oder Milch angerührt, das über eine Leitung 8 einem Wegeventil 11 zuströmen kann, das wiederum über Leitungen 9 und 10 mit den Saugste6 und 7 verbunden ist. Die Tiere können somit an den Saugstellen 6 oder 7 in Abhängigkeit von der Stellung des Wegeventils 11 Futtermittel aus dem Tränkeautomaten 2 ansaugen.

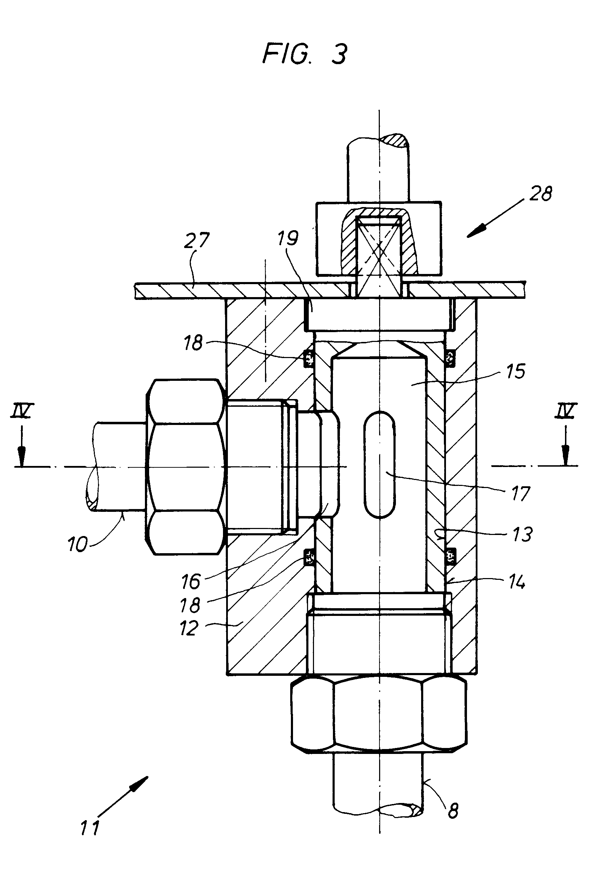

Das Wegeventil 11 ist, wie dies insbesondere der Figur 3 zu entnehmen ist, als in einem Gehäuse 12 angeordneter Drehschieber 14 ausgebildet, der eine zentrale Aufnahmekammer 15 aufweist und mit zwei Austrittsöffnungen 16 und 17 versehen ist. In das als Quader mit quadratischer Querschnittsfläche ausgebildete Gehäuse 12 ist dazu eine Bohrung 13 eingearbeitet, in der der Drehschieber 14, abgestützt mittels eines an diesem angeformten Bundes 19, drehbar gelagert ist. Außerdem sind in die Außenmantelfläche des Drehschiebers 14 oberhalb und unterhalb der als Schlitze gestalteten Austrittsöffnungen 16 und 17 Dichtungen 18 eingesetzt, so daß Futtermittel nicht aus dem Gehäuse 12 austreten kann. Durch die als Längsschlitze ausgebildeten Austrittsöffnungen 16 und 17 ist außerdem gewährleistet, daß zwischen diesen ein großer Dichtbereich gegeben ist.

Die in das an einem Deckel 27 eines Gehäuses 20 angeschraubte Gehäuse 12 eingearbeitete Bohrung 13 ist in Richtung einer Diagonalen versetzt angeordnet. Auf diese Weise ist im Bereich der Anschlußleitungen 9 und 10 eine ausreichende Wandstärke gegegen, so daß diese ohne Schwierigkeiten an das Gehäuse 12 angeschraubt werden können, dieses aber dennoch klein baut.

Der Drehverteiler 14 ist mit Hilfe eines in dem Gehäuse 20 eingebauten Antriebsmotors 21 gesteuert verstellbar. Dazu dient ein Steuerglied 24, das Schaltnocken 25 aufweist, die mit den Schaltstellungen des Drehschiebers 14 zugeordneten Endschaltern 26 zusammenwirken. Das Steuerglied 24 ist hierbei auf einer Welle 23 angeordnet, die von dem Antriebsmotor 21 über ein Untersetzungsgetriebe 22 antreibbar ist. Und um das Wegeventil 11 leicht abbauen zu können, ist dessen Drehschieber 14 über eine Steckkupplung 28 mit dem Steuerglied 24 gekoppelt.

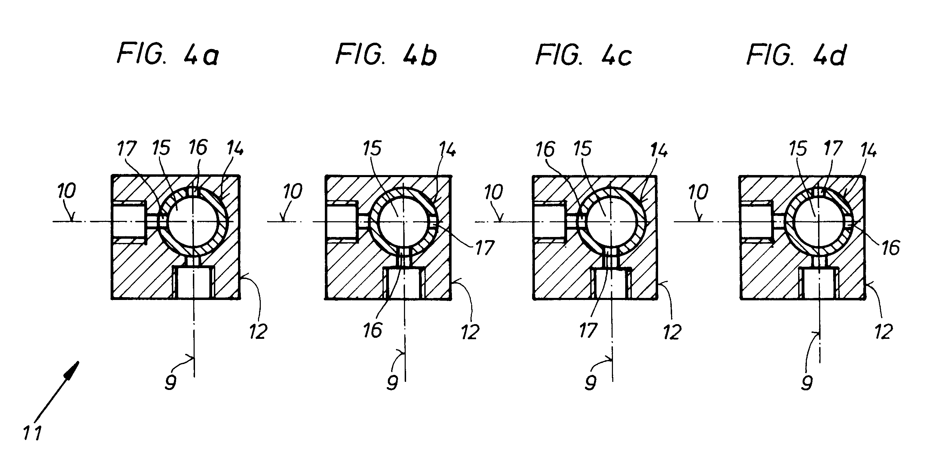

Das in dem gezeigten Ausführungsbeispiel vorgesehene Wegeventil 11 dient zur Verteilung des aufbereiteten Futtermittels auf die beiden Saugstellen 6 und 7 und weist, wie dies in den Figuren 4a bis 4d dargestellt ist, vier Schaltstellungen auf. In der Schaltstellung nach Figur 4a ist die Saugstelle 7 über die Leitung 10 mit der Aufnahmekammer 15 des Drehschiebers 14, an die die Zuführungsleitung 8 angeschlossen ist, verbunden, in der Schaltstellung gemäß Figur 4b kann dagegen über die Leitung 9 an der Saugstelle 6 Futtermittel abgerufen werden. In der in Figur 4c gezeigten Schaltstellung sind beide Leitungen 9 und 10 an die zentrale Aufnahmekammer 15 angeschlossen, so daß die gesamten Leitungen 8, 9 und 10 sowie das Wegeventil 11 gemeinsam durchgespült werden können. In der Schaltstellung nach Figur 4d sind beide Leitungen 9 und 10 abgesperrt und die Saugstellen 6 und 7 somit stillgelegt.

Um die Tiere nach Aufnahme einer entsprenden Futtermittelmenge zu veranlassen, die Saugstellen 6 und/oder 7 rasch zu verlassen, sind die Leitungen 9 und 10 über Zweigleitungen 32, in die jeweils ein Rückschlagventil 33 eingesetzt ist, an einen Wassertank 31 anschließbar. Bei mittels des Drehschiebers 14 abgesperrten Leitungen 9 und/oder 10 wird das Tier anstelle des Futtermittels somit kaltes Wasser ansaugen und rasch die Saugstelle 6 oder 7 verlassen.

## Patentansprüche

1. Vorrichtung zur gesteuerten Zuführung eines flüssigen in einem Tränkeautomaten aufbereiteten Futtermittels zu einer oder zwei Saugstellen mit einem dem Tränkeautomaten nachgeschalteten Wegeventil,
**dadurch gekennzeichnet,**
daß das Wegeventil (11) als in einem stationären Gehäuse (12) verstellbar rotierend gelagerter Drehschieber (14) ausgebildet ist, der eine zentrale an eine Zuführungsleitung (8) anschließbare Aufnahmekammer (15) aufweist und in dessen Wandung eine oder mehrere Austrittsöffnungen (16, 17) eingearbeitet sind, über die die Aufnahmekammer (15) wechselweise mit an dem Gehäuse (12) angebrachten Anschlußleitungen (9, 10) verbindbar ist.

2. Vorrichtung nach Anspruch 1,
**dadurch gekennzeichnet,**
daß das den Drehschieber (14) aufnehmende Gehäuse (12) als Quader mit einer rechteckigen, vorzugsweise quadratischen Querschnittsfläche ausgebildet ist, in dem in einer Bohrung (13) der Drehschieber (14) beispielsweise mittels eines angeformten Bundes (19) drehbar abgestützt ist.

3. Vorrichtung nach Anspruch 1 oder 2,
**dadurch gekennzeichnet,**
daß der Drehschieber (14) exzentrisch in dem Gehäuse (12) vorzugsweise in Richtung einer der Diagonalen versetzt in diesem angeordnet ist.

4. Vorrichtung nach einem der Ansprüche 1 bis 3,
**dadurch gekennzeichnet,**
daß die in den Drehschieber (14) eingearbeiteten Austrittsöffnungen (16, 17) als Längsschlitze ausgebildet sind.

5. Vorrichtung nach einem der Ansprüche 1 bis 4,
**dadurch gekennzeichnet,**
daß zur wechselweisen Zuführung von Futtermittel zu zwei Saugstellen (6, 7) der Drehschieber (14) mit zwei rechtwinklig zueinander versetzt angeordneten Austrittsöffnungen (16, 17) versehen und in vier Schaltstellungen verstellbar ist.

6. Vorrichtung nach einem der Ansprüche 1 bis 5,
**dadurch gekennzeichnet,**
daß der Drehschieber (14) trieblich mit einem steuerbaren Antriebsmotor (21) verbunden ist.

7. Vorrichtung nach einem der Ansprüche 1 bis 6,
**dadurch gekennzeichnet,**
daß zwischen dem Antriebsmotor (21) und dem Drehschieber (14) ein Steuerglied (24) eingesestzt ist, das den Schaltstellungen des Drehschiebers (14) zugeordnete mit Endschaltern (26) zusammenwirkende Schaltnocken (25) aufweist.

8. Vorrichtung nach Anspruch 7,
**dadurch gekennzeichnet,**
daß der Drehschieber (14) mittels einer Steckkupplung (28) lösbar mit dem Steuerglied (24) verbunden ist.

9. Vorrichtung nach einem der Ansprüche 1 bis 8,
**dadurch gekennzeichnet,**
das die an das Wegeventil 11 angeschlossenen zu den Saugstellen (6, 7) führenden Leitungen (9, 10) bei geschlossenem Wegeventil (11) jeweils über eine mit einem Rückschlagventil (33) versehene Zweigleitung (32) an einen Wassertank (31) oder dgl. anschließbar sind.

## Claims

1. A device for the controlled feeding of a liquid feedstuff prepared in an automatic dispensing unit to one or two suckling points by means of a directional valve,
**characterized in that,**
the directional valve (11) is produced in the form of a rotary slide valve (14) which is adjustably mounted in a stationary housing (12) in which it may rotate, whereby the rotary slide valve (14) demonstrates an intake chamber (15) which can be connected to a feed line (8), and that the walls of the rotary slide valve (14) have one or more outlet orifices (16, 17) formed into them, by means of which the intake chamber (15) can be alternatingly brought into connection with different connection lines (9, 10) which are fitted to the housing.

2. A device in accordance with Claim 1,
**characterized in that,**
the housing (12) inside which the rotary slide valve (14) is incorporated is produced in the form of a cuboid having rectangular, or in a preferred embodiment, square cross-sectional surfaces, and that the rotary slide valve (14) is located within a bore (13) in such a manner that the rotary slide valve (14) may rotate, for example by means of a collar (19) formed onto it.

3. A device in accordance with Claim 1 or Claim 2,
**characterized in that,**
the rotary slide valve (14) is located eccentrically within the housing (12), and in a preferred embodiment, is located within the housing (12) a position offset to one of the diagonals thereof.

4. A device in accordance with one or more of Claims 1 to 3,
**characterized in that,**
the outlet orifices (16, 17) formed into the rotary slide valve (14) are produced as elongated slots.

5. A device in accordance with one or more of Claims 1 to 4,
**characterized in that,**
in order to accomplish the alternating feeding of feedstuff to two suckling points (6, 7), the rotary slide valve (14) is provided with two outlet orifices (16, 17) which are located offset at right angles to one another, and the rotary slide valve (14) may be set to four switching positions.

6. A device in accordance with one or more of Claims 1 to 5,
**characterized in that,**
the rotary slide valve (14) is located in a driven connection with a controllable drive motor (21).

7. A device in accordance with one or more of Claims 1 to 6,
**characterized in that,**
a control element (24) is inserted between the drive motor (21) and the rotary slide valve (14), and that the control element (24) demonstrates switching cams (25) which are arranged in accordance with the switching positions of the rotary slide valve (14), and which act in conjunction with limit switches (26).

8. A device in accordance with Claim 7,
**characterized in that,**
a plug-in coupling (28) provides a separable connection between the rotary slide valve (14) and the control element (24).

9. A device in accordance with one or more of Claims 1 to 8,
**characterized in that,**
when the rotary slide valve (14) is closed, the lines (9, 10) which are connected to the directional valve (11) and which lead to the suckling points (6, 7) may each be connected to a water tank (31) or similar by means of a branch line (32) which is provided with a non-return valve (33).

## Revendications

1. Dispositif destiné à l'amenée commandée d'un liquide d'alimentation traité dans un abreuvoir automatique, vers une ou deux bouches d'aspiration, avec une vanne de distribution montée en aval de l'abreuvoir,
caractérisé par le fait que
la vanne de distribution (11) soit conçue sous la forme d'un tiroir rotatif (14) réglable, tournant dans un carter stationnaire (12) et muni d'une chambre de réception centrale (15) qui se laisse brancher sur une conduite d'arrivée (8) et dont la paroi comporte une ou plusieurs ouvertures de sortie (16, 17) par l'intermédiaire desquelles la chambre de réception (15) communique alternativement avec les conduites de raccordement (9, 10) prévues sur le carter (12).

2. Dispositif d'après la revendication 1,
caractérisé par le fait que
le carter (12) recevant le tiroir rotatif (14) soit conçu sous la forme d'un cube disposant d'une section rectangulaire, de préférence carrée, à l'intérieur duquel le tiroir rotatif (14) tourne dans un alésage (13), par exemple sur un collet (19) qui y est formé.

3. Dispositif d'après les revendications 1 ou 2,
caractérisé par le fait que
le tiroir rotatif (14) soit disposé d'un manière excentrique dans le carter (12), et décalé de préférence en direction d'une des diagonales.

4. Dispositif d'après une des revendications 1 à 3,
caractérisé par le fait que
les ouvertures de sortie (16, 17) pratiquées dans le tiroir rotatif (14) soient conçues sous la forme de fentes longitudinales.

5. Dispositif d'après une des revendications 1 à 4,
caractérisé par le fait que
pour le refoulement alternatif de l'aliment vers les deux bouches d'aspiration (6, 7), le tiroir rotatif (14) soit muni de deux ouvertures de sortie (16, 17) décalées perpendiculairement l'une par rapport à l'autre, et qu'il se laisse commuter sur quatre positions.

6. Dispositif d'après une des revendications 1 à 5,
caractérisé par le fait que
le tiroir rotatif (14) soit lié à un moteur d'entraînement (21) qui se laisse commander.

7. Dispositif d'après une des revendications 1 à 6,
caractérisé par le fait
qu'entre le moteur d'entraînement (21) et le tiroir rotatif (14), il soit monté un organe de commande (24) comprenant des cames de commande (25) assignées aux positions de commutation du tiroir rotatif (14) et agissant en corrélation avec les contacteurs de fin de course (26).

8. Dispositif d'après la revendication 7,
caractérisé par le fait
qu'au moyen d'un accouplement à insertion (28), le tiroir rotatif (14) soit lié d'une manière à ce qu'il puisse être desserré, avec l'organe de commande (24).

9. Dispositif d'après une des revendications 1 à 8,
caractérisé par le fait que,
lorsque la vanne de distribution (11) est fermée, les conduites (9, 10) branchées sur la vanne de distribution (11) et menant vers les bouches d'aspiration (6, 7) puissent être raccordées au moyen d'une conduite de dérivation (32) munie respectivement d'un clapet anti-retour (33), à un réservoir d'eau (31) ou un dispositif semblable.
